(19) Europäisches Patentamt
European Patent Office
Office européen des brevets

(11) **EP 3 995 543 A1**

(12) **EUROPEAN PATENT APPLICATION**
published in accordance with Art. 153(4) EPC

(43) Date of publication:
**11.05.2022 Bulletin 2022/19**

(21) Application number: 20834469.7

(22) Date of filing: **17.06.2020**

(51) International Patent Classification (IPC):
*C08L 101/06* (2006.01)    *B82Y 30/00* (2011.01)
*C08B 15/04* (2006.01)    *C08L 1/02* (2006.01)
*C08L 101/02* (2006.01)

(52) Cooperative Patent Classification (CPC):
**B82Y 30/00; C08B 15/04; C08L 1/02; C08L 101/02; C08L 101/06**

(86) International application number:
**PCT/JP2020/023667**

(87) International publication number:
**WO 2021/002194 (07.01.2021 Gazette 2021/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2019 JP 2019124096**
            **27.01.2020 JP 2020010469**

(71) Applicant: **Nippon Paper Industries Co., Ltd.**
**Tokyo 114-0002 (JP)**

(72) Inventors:
- **NAKAYAMA Takeshi**
  **Tokyo 114-0002 (JP)**
- **MATSUMOTO Makoto**
  **Tokyo 114-0002 (JP)**
- **SATO Shinji**
  **Tokyo 114-0002 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **MIXED SOLUTION**

(57) This mixed suspension contains (1) a dispersant, (2) a cellulose nanofiber, and (3) a filler.

**Description**

Technical Field

The present invention relates to mixed suspension containing a cellulose nanofiber and a filler.

Background Art

Nanotechnology, which is a technology for freely controlling substances in a nanometer region, that is, on an atomic or molecular scale, is expected to help creation of various convenient new materials and devices. A cellulose nanofiber obtained by finely defibrating plant fibers are also one of the examples thereof, and this cellulose nanofiber has very high crystallinity, are characterized by having a low thermal expansion coefficient and a high elastic modulus, and has a high aspect ratio. Thus, the cellulose nanofiber is expected to have effect as an additive for imparting functions such as imparting strength and shape stabilization. Furthermore, the cellulose nanofiber has viscosity characteristics such as pseudoplasticity and thixotropy in the state of a dispersion, and is expected to have effect as an additive such as a thickener.
Various developments and researches have been conducted on this cellulose nanofiber, and for example, Patent Literature 1 discloses a fine cellulose fiber (cellulose nanofiber) having a number average fiber diameter of 2 to 150 nm, in which a carboxy group is introduced into a part of a hydroxyl group of the cellulose.
This cellulose nanofiber has characteristics of a high viscosity at a low shear rate and a low viscosity at a high shear rate, in addition to having functions such as imparting strength and shape stability. As such, the cellulose nanofiber is used as a highly functional thickener in various fields such as food, medicine/cosmetics, daily necessities, civil engineering/building materials, papermaking, paints/inks, and other industrial materials. In these fields, a mixed suspension containing a filler may be used, and it has been found that the dispersion stability of the filler is improved by adding cellulose nanofibers as a thickener.

Citation List

Patent Literature

Patent Literature 1: JP 2008-1728 A

Summary of Invention

Technical Problem

However, a mixed suspension containing a cellulose nanofiber, which is further excellent in dispersion stability of the filler, has been required.
Therefore, an object of the present invention is to provide mixed suspension containing a cellulose nanofiber excellent in dispersion stability of fillers.

Solution to Problem

The present invention provides the following [1] to [8].

[1] A mixed suspension containing (1) to (3) below:

(1) a dispersant;
(2) a cellulose nanofiber; and
(3) a filler.

[2] The mixed suspension according to [1], in which the dispersant is an anionic polymer compound.
[3] The mixed suspension according to [2], in which the anionic polymer compound is a polymer compound having a carboxy group or a polymer compound having a phosphate group.
[4] The mixed suspension according to [1] to [3], in which the cellulose nanofiber is an anionically modified cellulose nanofiber.
[5] The mixed suspension according to [4], in which the anionically modified cellulose nanofiber is an oxidized cellulose nanofiber.

[6] The mixed suspension according to [5], in which the oxidized cellulose nanofiber has an amount of the carboxy group of 0.4 to 1.0 mmol/g.

[7] The mixed suspension according to [1] to [6], in which an amount of the cellulose nanofiber to be added is an amount such that a concentration is 0.1 mass% or more.

[8] The mixed suspension according to any one of [1] to [7], in which a water separation rate after leaving to stand for 72 hours is less than 1%.

Advantageous Effects of Invention

According to the present invention, mixed suspension containing a cellulose nanofiber excellent in dispersion stability of fillers can be provided.

Description of Embodiments

The mixed suspension of the present invention contains (1) a dispersant, (2) a cellulose nanofiber, and (3) a filler.

(1) Dispersant

The dispersant can be used without any limitation as long as the effect of the present invention is exhibited, and for example, any low-molecular-weight compound and polymer compound such as a carboxylic acid-based, a urethane-based, an acrylic resin-based, a polyether-based, a polyester-based, and a fatty acid-based compound can be used. In consideration of the properties of the filler and the cellulose nanofiber to be blended in the mixed suspension of the present invention, a compound capable of giving good dispersibility is preferably selected. Note that cellulose nanofibers contain a large amount of hydroxyl groups, and thus the dispersant containing a large amount of hydrophobic groups may inhibit dispersibility. In addition, any of anionic, cationic, and nonionic dispersants can be used. The dispersants may be used singly, or two or more of these may be used in mixture.

The dispersant used in the present invention does not contain the cellulose nanofiber described in (2).

When an anionic polymer compound is used as the dispersant, a polymer compound having a functional group such as a carboxy group, a sulfonate group, a phosphate group, or a sulfuric acid ester group can be used. When the dispersant is used at a pH higher than the pKa (acid dissociation constant) of each functional group, such functional group becomes an anionic group, and the mixed suspension can be adjusted without aggregating the anionic cellulose nanofiber dispersion. The functional group may be appropriately selected according to the pH of the mixed suspension to be adjusted and the required basicity.

Examples of the polymer compound having a carboxy group include polycarboxylic acid, carboxymethyl cellulose, and alginic acid. Examples of the polycarboxylic acid include polyacrylic acid, sodium polyacrylate, a styrene-maleic anhydride copolymer, and an olefin-maleic anhydride copolymer. When a polymer compound having a carboxy group is used as the dispersant, the carboxy group may be in the form of a metal salt or an ammonium salt. When the mixed suspension of the present invention is used for applications requiring water resistance, the carboxy group in an ammonium salt form can be appropriately selected.

Examples of the polymer compound having a phosphate group include polyoxyethylene alkyl ether phosphate, polyoxyethylene phenyl ether phosphate, and alkyl phosphate.

Examples of the polyether-based compound include pluronic polyether, polyether dialkyl ester, polyether dialkyl ether, polyether epoxy-modified product, and polyetheramine. For example, the balance between hydrophilicity and hydrophobicity can be adjusted by changing the ratio of polyoxyethylene and polyoxypropylene. Examples of the urethane-based compound include urethane association-type compounds, and for example, by forming a polyester chain or a polyether chain as a side chain in polyurethane as a main skeleton, compatibility and stability by steric hindrance can be adjusted. Examples of the fatty acid-based compound include aliphatic alcohol sulfates, aliphatic amines, and aliphatic esters.

The amount of the dispersant to be added to the mixed suspension of the present invention may be an amount capable of sufficiently dispersing the filler, and is preferably 0.01 to 25 parts by mass, and more preferably 0.1 to 10 parts by mass, per 100 parts by mass of the filler.

(2) Cellulose Nanofiber

In the present invention, a cellulose nanofiber (CNF) is a fine fiber obtained by finely dividing pulp, which is a cellulose raw material, or the like to a nanometer level, and having a fiber diameter of about 3 to 500 nm. The average fiber diameter and average fiber length of the cellulose nanofibers can be determined by averaging fiber diameters and fiber lengths obtained from results of observing the fibers using an atomic force microscope (AFM) or a transmission electron microscope (TEM). Cellulose nanofibers can be obtained by finely dividing pulp by applying mechanical force thereto, or can be obtained by defibrating modified cellulose obtained by chemical modification of anionically modified cellulose (carboxylated cellulose (also referred to as oxidized cellulose), carboxymethylated cellulose, cellulose having a phosphoric acid ester group introduced thereinto, and the like), cationically modified cellulose, or the like. The average fiber length and average fiber diameter of the fine fibers can be adjusted by oxidation treatment and defibration treatment.

The average aspect ratio of the cellulose nanofiber used in the present invention is usually 50 or more. The upper limit is not particularly limited, but is usually 1000 or less, more preferably 700 or less, and still more preferably 500 or less. The average aspect ratio can be calculated by the following equation:

```
Aspect ratio = average fiber length/average fiber

diameter
```

<Cellulose Raw Material>

The origin of the cellulose raw material which is a raw material of cellulose nanofibers is not particularly limited, and examples thereof include plants (e.g., wood, bamboo, hemp, jute, kenaf, wastes in farm land, cloth, pulp (softwood unbleached kraft pulp (NUKP), softwood bleached kraft pulp (NBKP), hardwood unbleached kraft pulp (LUKP), hardwood bleached kraft pulp (LBKP), bleached kraft pulp (BKP), softwood unbleached sulfite pulp (NUSP), softwood bleached sulfite pulp (NBSP) thermomechanical pulp (TMP), recycled pulp, waste paper, and the like), animals (e.g., Ascidiacea), algae, microorganisms (e.g., acetic acid bacteria (Acetobacter)), and microbial products. The cellulose raw material may be any one of them or a combination of two or more thereof, but is preferably a cellulose raw material derived from a plant or a microorganism (e.g., cellulose fibers), and more preferably a cellulose raw material derived from a plant (e.g., cellulose fibers).

The number average fiber diameter of the cellulose raw material is not particularly limited, but is about 30 to 60 $\mu$m in the case of softwood kraft pulp which is a general pulp, and about 10 to 30 $\mu$m in the case of hardwood kraft pulp. In the case of other pulp, those subjected to general purification are about 50 $\mu$m. For example, when a chip or the like having a size of several centimeters is purified, mechanical treatment is preferably performed thereon with a disintegrator such as a refiner or a beater so that the number average fiber diameter is adjusted to about 50 $\mu$m.

<Chemical Modification>

In the present invention, as the modified cellulose, anionically modified cellulose or cellulose obtained by cationic modification may be used. In such a case, the modified cellulose is preferably such that the dispersion of the filler is favorable in accordance with the types of filler and dispersant to be blended in the mixed suspension of the present invention. For example, when an anionic polymer compound is used as the dispersant, an anionically modified cellulose nanofiber is preferably selected from the viewpoint of easily obtaining a synergistic effect for suppressing aggregation of the filler.

Examples of the functional group introduced by anionic modification include a carboxy group, a carboxymethyl group, a sulfone group, a phosphoric acid ester group, and a nitro group. Among them, preferred are a carboxy group, a carboxymethyl group, and a phosphoric acid ester group, and more preferred is a carboxy group.

(Carboxylation)

In the present invention, when carboxylated (oxidized) cellulose is used as the modified cellulose, the carboxylated cellulose (also referred to as oxidized cellulose) can be obtained by carboxylating (oxidizing) the above cellulose raw material by a publicly known method. In the carboxylation, the amount of the carboxy group is preferably adjusted to 0.2 to 1.55 mmol/g, more preferably 0.4 to 1.0 mmol/g, per bone dry mass of the anionically modified cellulose nanofiber. Too small amount of the carboxy group requires a large amount of energy for defibration in order to obtain a highly transparent and uniform nanofiber dispersion. In the highly transparent nanofiber dispersion, there is little residual coarse fibers such as fibers not having defibrated, whereby the appearance of the mixed suspension is not impaired. In addition, too large amount of the carboxy group may cause a decrease in viscosity of the nanofiber dispersion arising from deterioration of fibers due to excessive addition of an oxidizing chemical and reaction, and a decrease in viscosity retention due to stirring treatment. The relationship between the amount of carboxy groups and the viscosity retention is not necessarily clear. However, it is presumed that sufficiently defibrating the modified pulp having a low degree of modification facilitates formation of hydrogen bonds between the oxidized CNFs in addition to a decrease in the surface charge of the oxidized CNFs by exposure of a site having a hydroxyl group that is not chemically surface-treated, whereby the viscosity at low shear is retained.

An example of a method for measuring the amount of carboxy groups will be described below. Oxidized cellulose in an amount of 60 mL of a 0.5 mass% slurry (aqueous dispersion) is prepared, a 0.1M hydrochloric acid aqueous solution is added thereto to adjust the pH to 2.5, and then the electric conductivity is measured while adding dropwise a 0.05N sodium hydroxide aqueous solution until the pH reaches 11. The amount of carboxy groups can be calculated from the amount of sodium hydroxide (a) consumed in the neutralization stage of weak acid having a gentle change in electrical conductivity, using the following equation.

$$\text{Amount of carboxy group [mmol/g oxidized cellulose]} = a$$

$$[\text{mL}] \times 0.05/\text{mass [g] of oxidized cellulose}$$

As an example of the carboxylation (oxidation) method, a method of oxidizing a cellulose raw material in water using an oxidizing agent in the presence of an N-oxyl compound and a compound selected from the group consisting of bromide, iodide, or a mixture thereof can be exemplified. By this oxidation reaction, the primary hydroxyl group at the C6-position of the glucopyranose ring on the surface of the cellulose is selectively oxidized, and a cellulose fiber having an aldehyde group and having a carboxy group (-COOH) or a carboxylate group (-COO$^-$) on the surface thereof can be obtained. The concentration of cellulose during the reaction is not particularly limited, but is preferably 5 mass% or less.

The N-oxyl compound refers to a compound capable of generating a nitroxy radical. As the N-oxyl compound, any compound that promotes an intended oxidation reaction can be used. Examples thereof include 2,2,6,6-tetramethylpiperidine-1-oxy radical (TEMPO) and derivatives thereof (e.g., 4-hydroxy TEMPO).

The amount of the N-oxyl compound to be used is not particularly limited as long as it is a catalytic amount capable of oxidizing cellulose as a raw material. For example, it is preferably 0.01 to 10 mmol, more preferably 0.01 to 1 mmol, and still more preferably 0.05 to 0.5 mmol, per 1g of bone-dry cellulose. In addition, it is preferably about 0.1 to 4 mmol/L with respect to the reaction system.

The bromide is a compound containing bromine, and examples thereof include alkali metal bromides that can be dissociated and ionized in water. Further, the iodide is a compound containing iodine, and examples thereof include alkali metal iodides. The amount of the bromide or iodide to be used can be selected in a range in which the oxidation reaction can be promoted. The total amount of the bromide and the iodide is, for example, preferably 0.1 to 100 mmol, more preferably 0.1 to 10 mmol, and still more preferably 0.5 to 5 mmol, per 1g of bone-dry cellulose.

As the oxidizing agent, a publicly known oxidizing agent can be used, and for example, a halogen, a hypohalous acid, a halous acid, a perhalogen acid or a salt thereof, a halogen oxide, a peroxide, or the like can be used. Among them, preferred is sodium hypochlorite which is inexpensive and has a low environmental load. The amount of the oxidizing agent to be used is, for example, preferably 0.5 to 500 mmol, more preferably 0.5 to 50 mmol, still more preferably 1 to 25 mmol, and most preferably 3 to 10 mmol, per 1g of bone-dry cellulose. In addition, it is preferably 1 to 40 mol per 1 mol of the N-oxyl compound, for example.

The oxidation of cellulose allows the reaction to proceed efficiently even under relatively mild conditions. Therefore, the reaction temperature is preferably 4 to 40°C, and may be room temperature of about 15 to 30°C. Since a carboxy group is generated in cellulose as the reaction proceeds, a decrease in pH of the reaction liquid is observed. To efficiently progress the oxidation reaction, it is preferable to add an alkaline solution such as a sodium hydroxide aqueous solution to maintain the pH of the reaction liquid at about 8 to 12, preferably about 10 to 11. The reaction medium is preferably water because it is easy to handle and side reactions hardly occur.

The reaction time in the oxidation reaction can be appropriately set according to the degree of progress of oxidation, and is usually about 0.5 to 6 hours, for example, about 0.5 to 4 hours.

Furthermore, the oxidation reaction may be performed separately in two stages. For example, the oxidized cellulose obtained by filtration after completion of the first-stage reaction is oxidizing again under the same or different reaction conditions, whereby the oxidized cellulose can be efficiently oxidized without undergoing any reaction inhibition by salt that is by-produced in the first-stage reaction.

As another example of the carboxylation (oxidation) method, a method of oxidizing a cellulose raw material by bringing gas containing ozone into contact therewith can be exemplified. By this oxidation reaction, hydroxyl groups at least at the 2-position and the 6-position of the glucopyranose ring are oxidized, and the cellulose chain is decomposed. The ozone concentration in the gas containing ozone is preferably 50 to 250 g/m$^3$, and more preferably 50 to 220 g/m$^3$. The amount of ozone to be added to the cellulose raw material is preferably 0.1 to 30 parts by mass and more preferably 5 to 30 parts by mass when the solid content of the cellulose raw material is 100 parts by mass. The temperature of the ozone treatment is preferably 0 to 50°C, and more preferably 20 to 50°C. The time of the ozone treatment is not particularly limited, but is about 1 to 360 minutes, and preferably about 30 to 360 minutes. When conditions of the ozone treatment are within these ranges, cellulose can be prevented from being excessively oxidized and decomposed, and the yield of oxidized cellulose is good. After the ozone treatment is performed, the additional oxidation treatment may be performed using an oxidizing agent. The oxidizing agent used in the additional oxidation treatment is not particularly limited, but examples thereof include chlorine-based compounds such as chlorine dioxide and sodium chlorite; oxygen; hydrogen peroxide; persulfuric acid; and peracetic acid. For example, these oxidizing agents are dissolved in a polar organic solvent such as water or alcohol to prepare an oxidizing agent solution, and the cellulose raw material is immersed in the solution, whereby the additional oxidation treatment can be performed.

The amount of the carboxy group of the oxidized cellulose can be adjusted by controlling the amount of the oxidizing agent to be added and the reaction conditions such as the reaction time, both of which have been described above.

(Carboxymethylation)

In the present invention, when carboxymethylated cellulose is used as the modified cellulose, the carboxymethylated cellulose may be obtained by carboxymethylating the cellulose raw material by a publicly known method, or a commercially available product may be used. In any case, preferred is a cellulose having a degree of substitution with carboxymethyl group per anhydroglucose unit of 0.01 to 0.50. As an example of a method for producing such carboxymethylated cellulose, the following method can be exemplified. Cellulose is used as a starting material, and as a solvent, 3 to 20 times by mass of water and/or a lower alcohol, specifically, water, methanol, ethanol, N-propyl alcohol, isopropyl alcohol, N-butanol, isobutanol, tertiary butanol, or the like is used singly, or mixed medium of two or more of these are used. Note that when the lower alcohol is mixed, the mixing proportion of the lower alcohol is 60 to 95 mass%. As the mercerizing agent, alkali metal hydroxide, specifically, sodium hydroxide or potassium hydroxide is used at 0.5 to 20 times the molar amount of anhydroglucose residue of the starting material. The starting material, the solvent, and the mercerizing agent are mixed, and the mixture is mercerized at a reaction temperature of 0 to 70°C, preferably 10 to 60°C, and for a reaction time of 15 minutes to 8 hours, preferably 30 minutes to 7 hours. Thereafter, a carboxymethylating agent is added at 0.05 to 10.0 times the molar amount of glucose residue, and the mixture is etherified at a reaction temperature of 30 to 90°C, preferably 40 to 80°C, and for a reaction time of 30 minutes to 10 hours, preferably 1 hour to 4 hours.

Note that in the present description, "carboxymethylated cellulose", which is one of modified celluloses used for preparation of cellulose nanofibers, refers to cellulose that maintains at least a part of the fibrous shape even when dispersed in water. Therefore, "carboxymethylated cellulose" is distinguished from carboxymethyl cellulose, which is one of water-soluble polymers exemplified as a dispersant in the present description. When the aqueous dispersion of "carboxymethylated cellulose" is observed with an electron microscope, a fibrous substance can be observed. On the other hand, no fibrous substance is observed when an aqueous dispersion of carboxymethyl cellulose, which is one of water-soluble polymers, is observed. In addition, the peak of cellulose I-type crystal can be observed in "carboxymethylated cellulose" upon measurement thereof by X-ray diffraction, but no cellulose I-type crystal is observed in carboxymethyl cellulose as a water-soluble polymer.

(Phosphorylation)

Phosphorylated cellulose can be used as the chemically modified cellulose. Such cellulose is obtained by a method of mixing the above-described cellulose raw material with a powder or an aqueous solution of a phosphoric acid-based compound A, or a method of adding an aqueous solution of the phosphoric acid-based compound A to a slurry of the cellulose raw material.

Examples of the phosphoric acid-based compound A include phosphoric acid, polyphosphoric acid, phosphorous acid, phosphonic acid, polyphosphonic acid, and esters thereof. These may be in the form of salts. Among them, preferred is a compound having a phosphate group because it is low in cost and easy to handle, and a phosphate group can be introduced into cellulose of pulp fibers to improve defibration efficiency. Examples of the compound having a phosphate group include phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. These can be used singly or in combination of two or more of these. Among them, more preferred are phosphoric acid, a sodium salt of phosphoric acid, a potassium salt of phosphoric acid, and an ammonium salt of phosphoric acid from the viewpoint of high efficiency of phosphate group introduction, easy defibration in the defibration step described later, and easy industrial application. Particularly preferred are sodium dihydrogen phosphate and disodium hydrogen phosphate. In addition, the phosphoric acid-based compound A is preferably used as an aqueous solution because the uniformity of the reaction is enhanced and the efficiency of phosphate group introduction is increased. The pH of the aqueous solution of the phosphoric acid-based compound A is preferably 7 or less because the efficiency of phosphate group introduction is increased, but the pH is preferably 3 to 7 from the viewpoint of suppressing hydrolysis of pulp fibers.

As an example of the method for producing the phosphorylated cellulose, the following method can be exemplified. The phosphoric acid-based compound A is added to dispersion of a cellulose raw material having a solid content concentration of 0.1 to 10 mass% with stirring to introduce a phosphate group into cellulose. When the amount of the cellulose raw material is 100 parts by mass, the amount of the phosphoric acid-based compound A to be added is preferably 0.2 to 500 parts by mass and more preferably 1 to 400 parts by mass in terms of the amount of a phosphorus element. When the proportion of the phosphoric acid-based compound A is the above-described lower limit value or more, the yield of the microfibrous cellulose can be further improved. However, when the proportion exceeds the above-described upper limit value, the effect of improving the yield reaches a ceiling, which is not preferable from the viewpoint of cost.

At this time, in addition to the cellulose raw material and the phosphoric acid-based compound A, a powder or an aqueous solution of a compound B other than the cellulose raw material and the phosphoric acid-based compound A may be mixed. The compound B is not particularly limited, but a nitrogen-containing compound exhibiting basicity is preferred. Here, "basicity" is defined as that the aqueous solution exhibits a peach to red color in the presence of a phenolphthalein indicator, or that the pH of the aqueous solution is greater than 7. The nitrogen-containing compound exhibiting basicity used in the present invention is not particularly limited as long as the effect of the present invention is exhibited, but preferred is a compound having an amino group. Examples thereof include, but are not particularly limited to, urea, methylamine, ethylamine, trimethylamine, triethylamine, monoethanolamine, diethanolamine, triethanolamine, pyridine, ethylenediamine, hexamethylenediamine. Among them, preferred is urea which is easy to handle at a low cost. The amount of the compound B to be added is preferably 2 to 1000 parts by mass, and more preferably 100 to 700 parts by mass per 100 parts by mass of the solid content of the cellulose raw material. The reaction temperature is preferably 0 to 95°C, and more preferably 30 to 90°C. The reaction time is not particularly limited, but is about 1 to 600 minutes, and more preferably 30 to 480 minutes. When the conditions for the esterification reaction are within these ranges, cellulose can be prevented from being excessively esterified and easily dissolved, and the yield of phosphorylated cellulose is good. After dehydrating the obtained suspension of phosphorylated cellulose, the dehydrated suspension is preferably heat-treated at 100 to 170°C from the viewpoint of suppressing hydrolysis of cellulose. Furthermore, the dehydrated suspension is preferably heated at 130°C or lower, preferably 110°C or lower while water is contained in the heat treatment to remove water, and then heat-treated at 100 to 170°C.

The degree of substitution with phosphate group per glucose unit of the phosphorylated cellulose is preferably 0.001 to 0.40. By introducing a phosphate group substituent into cellulose, cellulose electrically repels each other. Therefore, cellulose into which a phosphate group has been introduced can be easily defibrated into nanofibers. Note that cellulose having the degree of substitution with phosphate group per glucose unit of less than 0.001 cannot be sufficiently defibrated into nanofibers. On the other hand, cellulose having the degree of substitution with phosphate group per glucose unit of more than 0.40 swells or dissolves, and therefore cellulose may not be obtained as nanofibers. For efficient defibration, the phosphorylated cellulose raw material obtained as described above is preferably boiled and then washed with cold water.

(Cationization)

As the chemically modified cellulose, cellulose obtained by further cationizing the carboxylated cellulose can be used. The cationically modified cellulose can be obtained by reacting the carboxylated cellulose raw material with a cationizing agent such as glycidyltrimethylammonium chloride, 3-chloro-2-hydroxypropyltrialkylammonium halide or a halohydrin form thereof, and alkali metal hydroxide (sodium hydroxide, potassium hydroxide, or the like) as a catalyst in the presence of water or an alcohol having 1 to 4 carbon atoms.

The degree of substitution with cationic group per glucose unit is preferably 0.02 to 0.50. By introducing a cationic substituent into cellulose, cellulose electrically repels each other. Therefore, cellulose into which a cationic substituent has been introduced can be easily defibrated into nanofibers. Cellulose having the degree of substitution with cationic group per glucose unit of less than 0.02 cannot be sufficiently defibrated into nanofibers. On the other hand, cellulose having the degree of substitution with cationic group per glucose unit of more than 0.50 swells or dissolves, and therefore cellulose may not be obtained as nanofibers. For efficient defibration, the cationically modified cellulose raw material obtained as described above is preferably washed. The degree of substitution with cationic group can be adjusted by the amount of the reactant cationizing agent to be added and the composition ratio of water or an alcohol having 1 to 4 carbon atoms.

In the present invention, when the anionically modified cellulose obtained by anionically modifying a cellulose raw material is in a salt form, the type of the salt form is not limited, but a salt having good defibration and dispersibility, such as sodium or ammonium, is preferably selected.

<Defibration>

In the present invention, the device for defibration is not particularly limited, but a device of a high-speed rotation type, colloid mill type, high-pressure type, roll mill type, ultrasonic type, or the like is preferably used to apply a strong shear force to the aqueous dispersion. For efficient defibration, a wet high-pressure or ultra-high-pressure homogenizer capable of applying a pressure of 50 MPa or more to the aqueous dispersion and applying strong shear force is preferably used in particular. The pressure is more preferably 100 MPa or more, still more preferably 140 MPa or more. In addition, prior to the defibration/dispersion treatment by the high-pressure homogenizer, the above-described CNF can be subjected to pretreatment using a publicly known mixing, stirring, emulsifying, and dispersing apparatus such as a high-speed shear mixer, as necessary. The number of times of treatment (passes) in the defibration device may be one, or two or more, and is preferably two or more.

In the dispersion treatment, modified cellulose is usually dispersed in a solvent. The solvent is not particularly limited as long as it can disperse the modified cellulose, and examples thereof include water, an organic solvent (e.g., a hydrophilic organic solvent such as methanol), and a mixed solvent thereof. Since the cellulose raw material is hydrophilic, the solvent is preferably water.

The solid content concentration of the modified cellulose in the dispersion is usually 0.1 mass% or more, preferably 0.2 mass% or more, and more preferably 0.3 mass% or more. In this way, the appropriate liquid amount with respect to the amount of the cellulose fiber raw material can be secured, which is efficient. The upper limit thereof is usually 10 mass% or less, and preferably 6 mass% or less. In this way, fluidity can be maintained.

Prior to the defibration treatment or the dispersion treatment, pretreatment may be performed as necessary. The pretreatment may be performed using a mixing, stirring, emulsifying, or dispersing apparatus such as a high-speed shear mixer.

When the modified cellulose nanofiber obtained through the defibration step is in a salt form, the modified cellulose nanofiber may be used as it is, or may be used as an acid form by acid treatment using a mineral acid, a method using a cation exchange resin, or the like. Alternatively, the modified cellulose nanofiber may be used upon having imparted hydrophobicity thereto by a method using a cationic additive.

A modifier may be added to the cellulose nanofiber used in the present invention. For example, affinity of an anionically modified cellulose nanofiber to a solvent and dispersibility of a filler can be adjusted by bonding a nitrogen-containing compound, a phosphorus-containing compound, an onium ion, or the like to an anion group on the surface of the cellulose nanofiber and changing properties such as polarity.

In the present invention, when an acid form is present in the anionically modified cellulose nanofibers obtained by defibrating the anionically modified cellulose, dispersibility of the filler may be deteriorated. Therefore, a basic compound such as sodium hydroxide or ammonium may be additionally added thereto as appropriate to form a salt form.

When the mixed suspension of the present invention is used for a coating material or the like, and water resistance is required for a coating film obtained after the application and drying of the mixed suspension, the anionically modified cellulose nanofiber in an ammonium salt form is preferably used, for example. This is because ammonia is volatilized during drying to form an acid form, and the coating film is made water-resistant.

[Chemical Formula 1]　　　　　　$(-COO^-NH_4^+ \rightarrow -COOH + NH_3 \uparrow)$

The amount of the cellulose nanofiber to be added to the mixed suspension of the present invention has an advantage that the effect of preventing sedimentation of the filler increases as the added amount increases, whereas too large added amount may make greatly thickened mixed suspension which is difficult to handle. From this viewpoint, the solid content concentration of the CNF in the mixed suspension is preferably 0.01 to 5 mass%, and more preferably 0.1 to 0.5 mass%.

(3) Filler

The filler used in the present invention may be either an inorganic filler or an organic filler. The filler may have any shapes including a particle shape, a flat shape, and a fiber shape.

Examples of the inorganic filler include: inorganic compounds such as calcium carbonate (precipitated calcium carbonate, ground calcium carbonate), magnesium carbonate, barium carbonate, aluminum hydroxide, calcium hydroxide, magnesium hydroxide, zinc hydroxide, clay (kaolin, calcined kaolin, delaminated kaolin), talc, mica, zinc oxide, zinc stearate, titanium dioxide, silica produced from sodium silicate and a mineral acid (white carbon, silica/calcium carbonate complex, silica/titanium dioxide complex), white clay, bentonite, diatomaceous earth, calcium sulfate, and zeolite; metals such as aluminum, aluminum oxide, copper, zinc, iron, nickel, and tin, or alloys thereof; inorganic fillers obtained by recycling the ash obtained from the deinking process; and inorganic fillers obtained by forming a complex with silica or calcium carbonate in the process of regenerating the ash. As the calcium carbonate-silica composite, calcium carbonate and/or precipitated calcium carbonate-silica composite may be used, or amorphous silica such as white carbon may be used in combination with such composite.

Examples of the organic filler include urea-formalin resin, polystyrene resin, phenol resin, hollow fine particles, acrylamide complex, substances derived from wood (fine fiber, microfibrillated fiber, powdered kenaf), modified insoluble starch, ungelatinized starch.

One of the above-described fillers may be used singly, or two or more of these may be used in mixture.

An antiseptic agent, a surfactant such as a surface conditioner, a binder resin, a water-resistant agent, a thickener, and the like may be added as necessary to the mixed suspension of the present invention.

In the present invention, the effect of preventing sedimentation of the filler by the cellulose nanofiber is improved by adding a small amount of the dispersant to the mixed suspension. In particular, a filler having a larger particle size and a higher aspect ratio is more likely to exhibit the effect of adding a dispersant because such filler forms a coarser aggregate when aggregated and has higher sedimentation properties.

Examples

Hereinafter, the present invention will be described in more detail with reference to examples, but the present invention is not limited thereto.

<Water Separation Rate>

Of the mixed suspensions obtained in the examples and comparative examples, 50 mL of each was poured into a graduated cylinder having a volume of 50 mL in accordance with JIS R 3505, allowed to stand for 72 hours, and then the amount of the liquid in the transparent portion of the upper part of the mixed suspension in the graduated cylinder was visually read. Thereafter, the water separation rate was calculated by the following relationship. The results are listed in Table 1.

Water separation rate (%): (amount of liquid in transparent portion (mL)/total amount of mixed suspension (mL)) $\times$ 100

<Uniformity of Particle Size and Particle Size Distribution>

Of the mixed suspensions obtained in the examples and the comparative examples, the remaining 50 mL of each was allowed to stand for 3 days, and then a sample was collected from the bottom of the container. The volume average particle sizes (D10, D50, D90) of the obtained sample were measured using a laser diffraction particle size distribution analyzer (Mastersizer 3000, manufactured by Malvern Panalytical Ltd.). D10 is a particle size including 10% integrated from the minimum value in the particle size distribution using the volume average particle size, D50 is a particle size including 50% integrated from the minimum value, and D90 is a particle size including 90% integrated from the minimum value. Note that in this measurement, ion-exchanged water was used as a dispersion solvent, no ultrasonic wave was used, and circulation by a pump was performed.

In addition, the uniformity of the particle size distribution was measured using the same apparatus and the same sample as those in the measurement of the particle size. The uniformity of the particle size distribution is expressed as the following equation.

[Mathematical Formula 1]

$$\text{Uniformity} = \frac{\sum Vi|d50 - di|}{d50 \sum Vi}$$

Here, di is the particle size of each fraction, d50 is the median value of the particle size distribution, and Vi is the volume of each fraction. The uniformity is a scale of the absolute deviation from the median value of the particle size distribution, and is preferably 1 or less.

The obtained results of the particle size and uniformity of the particle size distribution are listed in Table 1.

<Transparency>

In the present description, transparency refers to the transmittance of light having a wavelength of 660 nm when the oxidized CNF is made into an aqueous dispersion having a solid content of 1% (w/v). The transparency of the oxidized CNF obtained in each production example was determined by preparing a CNF dispersion (solid content: 1% (w/v), dispersion medium: water) and measuring the transmittance of 660 nm light using an UV-VIS spectrophotometer UV-1800 (manufactured by SHIMADZU CORPORATION) and a square cell having an optical path length of 10 mm.

<Stability Test>

After weighing 210 g of the 1.0 mass% oxidized cellulose nanofiber aqueous dispersion obtained in each production example in a 600 mL plastic container, deionized water was added thereto so that the concentration was 0.7%, and the mixture was stirred (1000 rpm, 5 minutes) to give 300 g of a 0.7 mass% oxidized CNF aqueous dispersion. Furthermore, immediately after the concentration was adjusted, the Brookfield viscosity was measured at 6 rpm for 1 minute using a Brookfield viscometer (viscosity before stirring).
After measuring the Brookfield viscosity, 300 g of the oxidized CNF aqueous dispersion was stirred with a disperser for 30 minutes (1000 rpm, 23°C). Immediately after stirring for 30 minutes, the Brookfield viscosity was measured at 6 rpm for 1 minute using the Brookfield viscometer (viscosity after stirring).
The viscosity retention is determined by the following equation.

$$\text{Viscosity retention (\%)} = (\text{viscosity after stirring}/\text{viscosity before stirring}) \times 100$$

<Production Example 1>

Softwood-derived bleached unbeaten kraft pulp (brightness 85%) in an amount of 5.00 g (bone dry) was added to 500 mL of an aqueous solution in which 20 mg (0.025 mmol per 1g of bone-dry cellulose) of TEMPO (Sigma-Aldrich) and 514 mg (1.0 mmol per 1g of bone-dry cellulose) of sodium bromide were dissolved, and the mixture was stirred until the pulp was uniformly dispersed. A sodium hypochlorite aqueous solution was added to the reaction system so that the amount of sodium hypochlorite was 2.2 mmol/g, and an oxidation reaction was started. The pH in the system decreased during the reaction, but a 3M sodium hydroxide aqueous solution was sequentially added to adjust the pH to 10. The reaction was terminated at a point in time when sodium hypochlorite was consumed and the pH in the system did not change. The mixture after the reaction was filtered through a glass filter to separate pulp, and the pulp was sufficiently washed with water to give oxidized pulp (carboxylated cellulose). The pulp yield at this time was 93%, the time required for the oxidation reaction was 60 minutes, and the amount of carboxy group (hereinafter, may be referred to as "degree of modification") was 0.75 mmol/g. This was adjusted to 1.0% (w/v) with water, and defibrated using a high-pressure homogenizer until the transparency became sufficiently high to give an oxidized cellulose nanofiber aqueous dispersion having transparency of 88%. The average fiber diameter was 4 nm, and the aspect ratio was 280. The oxidized CNF aqueous dispersion was subjected to a stability test to give values of Brookfield viscosity before and after stirring. The viscosity retention at this time was 50%.

<Production Example 2>

Softwood-derived bleached unbeaten kraft pulp (brightness 85%) in an amount of 5.00 g (bone dry) was added to 500 mL of an aqueous solution in which 39 mg (0.05 mmol per 1g of bone-dry cellulose) of TEMPO (Sigma-Aldrich) and 514 mg (1.0 mmol per 1g of bone-dry cellulose) of sodium bromide were dissolved, and the mixture was stirred until the pulp was uniformly dispersed. A sodium hypochlorite aqueous solution was added to the reaction system so that the amount of sodium hypochlorite was 6.0 mmol/g, and an oxidation reaction was started. The pH in the system decreased during the reaction, but a 3M sodium hydroxide aqueous solution was sequentially added to adjust the pH to 10. The reaction was terminated at a point in time when sodium hypochlorite was consumed and the pH in the system did not change. The mixture after the reaction was filtered through a glass filter to separate pulp, and the pulp was sufficiently washed with water to give oxidized pulp (carboxylated cellulose). The pulp yield at this time was 90%, the time required for the oxidation reaction was 90 minutes, and the amount of carboxy group was 1.51 mmol/g. This was adjusted to 1.0% (w/v) with water, and defibrated using a high-pressure homogenizer to give an oxidized cellulose nanofiber aqueous dispersion having transparency of 95.0%. The average fiber diameter was 3 nm, and the aspect ratio was 250. The oxidized CNF aqueous dispersion was subjected to a stability test to give values of Brookfield viscosity before and after stirring. The viscosity retention at this time was 39%.

<Production Example 3>

Softwood-derived bleached unbeaten kraft pulp (brightness 85%) in an amount of 5.00 g (bone dry) was added to 500 mL of an aqueous solution in which 20 mg (0.025 mmol per 1g of bone-dry cellulose) of TEMPO (Sigma-Aldrich) and 514 mg (1.0 mmol per 1g of bone-dry cellulose) of sodium bromide were dissolved, and the mixture was stirred until the pulp was uniformly dispersed. A sodium hypochlorite aqueous solution was added to the reaction system so that the amount of sodium hypochlorite was 1.3 mmol/g, and an oxidation reaction was started. The pH in the system decreased during the reaction, but a 3M sodium hydroxide aqueous solution was sequentially added to adjust the pH to 10. The reaction was terminated at a point in time when sodium hypochlorite was consumed and the pH in the system did not change. The mixture after the reaction was filtered through a glass filter to separate pulp, and the pulp was sufficiently washed with water to give oxidized pulp (carboxylated cellulose). The pulp yield at this time was 99%, the time required for the oxidation reaction was 50 minutes, and the amount of carboxy group was 0.42 mmol/g. This was adjusted to 1.0% (w/v) with water, and defibrated using a high-pressure homogenizer until the transparency became sufficiently high to give an oxidized cellulose nanofiber aqueous dispersion having transparency of 75.2%. The average fiber diameter was 4 nm, and the aspect ratio was 380. The oxidized CNF aqueous dispersion was subjected to a stability test to give values of Brookfield viscosity before and after stirring. The viscosity retention at this time was 88%.

<Example 1>

The oxidized cellulose nanofiber aqueous dispersion of Production Example 1 obtained as described above was prepared in an amount corresponding to 0.2 mass% of CNF solid content, and added with stirring at 3000 rpm with a homomixer so as to contain 0.1 mass% of a polycarboxylic acid (trade name: ARON T-50, manufactured by Toagosei Co., Ltd.) as a dispersant in terms of solid content, followed by adding 10 mass% of kaolin (trade name: BARRISURF HX, manufactured by Imerys S.A.) as fillers and water, to prepare 100 mL of a mixed suspension. The water separation rate, the particle size, and the uniformity of the particle size of the obtained mixed suspension were measured.

<Examples 2-6, Examples 8-9, Examples 12-16>

Mixed suspensions were each prepared in the same manner as in Example 1 except that the amount of carboxy groups and the addition concentration of the oxidized cellulose nanofiber aqueous dispersion used, the type and the addition concentration of the dispersant, and the type of the filler were changed as indicated in Table 1. The water separation rate, the particle size, and the uniformity of the particle size of each of the obtained mixed suspensions were measured.

<Example 7>

The pH of the oxidized pulp obtained in Production Example 1 was adjusted to 2.4 with hydrochloric acid, and then washed twice with ion-exchanged water. Thereafter, 3.2g of polyetheramine (JEFFAMINE (registered trademark) M1000) was added per 4g of the solid content of the oxidized pulp, and the weight was adjusted to 400g with ion-exchanged water, and then the adjusted mixture was defibrated with a high-pressure homogenizer in the same manner as in Production Example 1 to give an oxidized cellulose nanofiber aqueous dispersion having transparency of 90%. The average fiber diameter was 4 nm, and the aspect ratio was 275. The oxidized CNF aqueous dispersion was subjected to a stability test to give values of Brookfield viscosity before and after stirring. The viscosity retention at this time was 52%. To this oxidized cellulose nanofiber dispersion, 10 mass% of kaolin (trade name: BARRISURF HX, manufactured by Imerys S.A.) as a filler and water were added in the same manner as in Example 1 to prepare 100 mL of a mixed suspension. The water separation rate, the particle size, and the uniformity of the particle size of the obtained mixed suspension were measured.

<Example 10>

Except that the oxidized cellulose nanofiber aqueous dispersion obtained in Production Example 2 was used, 100 mL of a mixed suspension was prepared in the same manner as in Example 1. The water separation rate, the particle size, and the uniformity of the particle size of the obtained mixed suspension were measured.

<Example 11>

Except that the oxidized cellulose nanofiber aqueous dispersion obtained in Production Example 3 was used, 100 mL of a mixed suspension was prepared in the same manner as in Example 1. The water separation rate, the particle size, and the uniformity of the particle size of the obtained mixed suspension were measured.

<Comparative Examples 1-5>

Mixed suspensions were each prepared in the same manner as in Example 1 except that the dispersant was not added and the addition concentration of the oxidized cellulose nanofiber and the type and addition concentration of the filler were changed as indicated in Table 1. The water separation rate, the particle size, and the uniformity of the particle size of each of the obtained mixed suspensions were measured.

<Comparative Examples 6-11>

Mixed suspensions were each prepared in the same manner as in Example 1 except that the cellulose nanofiber was not added and the type and addition concentration of the dispersant and the type and addition concentration of the filler were changed as indicated in Table 1. The water separation rate, the particle size, and the uniformity of the particle size of each of the obtained mixed suspensions were measured.

Note that details of the dispersants and the fillers used in examples and comparative examples are as follows.

(Dispersant)

- Product name: ARON T-50, sodium polyacrylate, solid content: 43%, manufactured by Toagosei Co., Ltd.
- Name: Polycarboxylic acid A, solid content: 36.0%
  Here, the polycarboxylic acid A was produced by the following method.

A glass reaction vessel equipped with a thermometer, a stirring device, a reflux apparatus, a nitrogen introduction tube, and a dropping device was charged with 148 parts of water and 94 parts (5 mol%) of polyethylene glycol polypropylene glycol monoallyl ether (average number of moles of ethylene oxide added: 37, average number of moles of propylene oxide added: 3, random addition of ethylene oxide and propylene oxide), the reaction vessel was purged with nitrogen under stirring, and the temperature was raised to 80°C under a nitrogen atmosphere. Thereafter, a monomer aqueous solution obtained by mixing 35 parts (40 mol%) of methacrylic acid, 5 parts (7 mol%) of acrylic acid, 63 parts (5 mol%) of methoxypolyethylene glycol methacrylate (average number of moles of ethylene oxide added: 25), 60 parts (43 mol%) of hydroxypropyl acrylate, 8 parts of 3-mercaptopropionic acid, and 165 parts of water, and a mixed suspension of 3 parts of ammonium persulfate and 47 parts of water were continuously added dropwise to a reaction vessel maintained at 80°C for 2 hours each. Furthermore, the mixture was reacted for 1 hour while the temperature was maintained at 100°C, whereby an aqueous solution of the copolymer (polycarboxylic acid A) was obtained.
- Product name: ARON A30SL, ammonium polyacrylate, solid content: 40%, manufactured by Toagosei Co., Ltd.
- Product name: ARON A-6114, carboxylic acid-based copolymer (ammonium salt), solid content: 40%, manufactured by Toagosei Co., Ltd.
- Product name: FS600LC, carboxymethyl cellulose, powdered, manufactured by Nippon Paper Industries Co., Ltd.
- Product name: JEFFAMINE (registered trademark) M1000, polyetheramine, manufactured by Huntsman Corporation
- Product name: DISPARLON AQ-330, polyether phosphate, 100% active ingredients, manufactured by Kusumoto Chemicals, Ltd.
- Product name: DEMOL EP, polymeric polycarboxylic acid, solid content: 25%, manufactured by Kao Corporation

(Filler)

- Product name: BARRISURF HX, kaolin, particle size%: 64 (< 2 $\mu$m), manufactured by IMERYS Minerals Japan K.K.
- Product name: Cal-lite KT, calcium carbonate, primary particle size: 300 nm (value observed with an electron microscope), manufactured by Shiraishi Kogyo Kaisha, Ltd.
- Product name: A-21S, mica, volume average particle size: 23 $\mu$m, aspect ratio: 70, manufactured by YAMAGUCHI MICA CO., LTD.
- Product name: A-11, mica, volume average particle size: 3 $\mu$m, manufactured by YAMAGUCHI MICA CO., LTD.
- Product name: B-82, mica, volume average particle size: 180 $\mu$m, aspect ratio: 100, manufactured by YAMAGUCHI MICA CO., LTD.

[Table 1]

(1/2)

| | Cellulose nanofiber | | Dispersant | | | Filler | | | Mixed suspension (after leaving to stand for 3 days) | | | | |
|---|---|---|---|---|---|---|---|---|---|---|---|---|---|
| | Amount of carboxy group mmol/g | Addition concentration | Type | Product name or name | Addition concentration | Type | Product name | Addition con-centration | Disper-sion stabil-ity Water separa-tion rate % | Average particle size D10 $\mu$m | Average particle size D50 $\mu$m | Average particle size D90 $\mu$m | Uniformity of particle size distribution |
| Example 1 | 0.75 | 0.2% | Polycarboxylic acid | ARON T-50 | 0.1% | Kaolin | BARRISURF HX | 10% | 0 | 3.08 | 8.25 | 28.3 | 0.93 |
| Example 2 | 0.75 | 0.1% | Polycarboxylic acid | ARON T-50 | 0.1% | Kaolin | BARRISURF HX | 10% | 0 | 3.09 | 8.19 | 28.1 | 0.92 |
| Example 3 | 0.75 | 0.2% | Polycarboxylic acid | Polycarboxylic acid A | 0.01% | Kaolin | BARRISURF HX | 10% | 0 | 3.09 | 8.24 | 27.7 | 0.90 |
| Example 4 | 0.75 | 0.2% | Polycarboxylic acid | ARON A30SL | 0.1% | Kaolin | BARRISURF HX | 10% | 0 | 3.05 | 8.19 | 27.6 | 0.92 |
| Example 5 | 0.75 | 0.2% | Polycarboxylic acid | ARON A-6114 | 0.1% | Kaolin | BARRISURF HX | 10% | 0 | 2.98 | 8.08 | 27.3 | 0.90 |
| Example 6 | 0.75 | 0.2% | Carboxymethyl cellulose | FS600LC | 0.1% | Kaolin | BARRISURF HX | 10% | 0 | 3.08 | 8.16 | 27.1 | 0.88 |
| Example 7 | 0.75 | 0.2% | Polyetheramine | JEFFAMINE (registered trademark) M1000 | 0.16% | Kaolin | BARRISURF HX | 10% | 0 | 3.08 | 8.18 | 27.4 | 0.92 |
| Example 8 | 0.75 | 0.2% | Polymeric polycarboxylic acid | DEMOL EP | 0.067% | Kaolin | BARRISURF HX | 10% | 0 | 3.09 | 8.16 | 27.5 | 0.91 |
| Example 9 | 0.75 | 0.2% | Tripolyphos-phoric acid | Tripolyphos-phoric acid | 0.067% | Kaolin | BARRISURF HX | 10% | 0 | 3.10 | 8.14 | 27.6 | 0.90 |
| Example 10 | 1.51 | 0.2% | Polycarboxylic acid | ARON T-50 | 0.1% | Kaolin | BARRISURF HX | 10% | 0 | 3.11 | 8.12 | 27.6 | 0.87 |
| Example 11 | 0.42 | 0.2% | Polycarboxylic acid | ARON T-50 | 0.1% | Kaolin | BARRISURF HX | 10% | 0 | 3.01 | 8.15 | 27.0 | 0.92 |

(continued)

| | Cellulose nanofiber | | Dispersant | | | Filler | | | Mixed suspension (after leaving to stand for 3 days) | | | | |
|---|---|---|---|---|---|---|---|---|---|---|---|---|---|
| | Amount of carboxy group mmol/g | Addition concentration | Type | Product name or name | Addition concentration | Type | Product name | Addition concentration | Dispersion stability Water separation rate % | Average particle size D10 $\mu$m | Average particle size D50 $\mu$m | Average particle size D90 $\mu$m | Uniformity of particle size distribution |
| Example 12 | 0.75 | 0.1% | Polycarboxylic acid | ARON T-50 | 0.1% | Calcium carbonate | Cal-lite KT | 10% | 0 | 2.96 | 7.35 | 15.0 | 0.50 |
| Example 13 | 0.75 | 0.2% | Polycarboxylic acid | ARON T-50 | 0.1% | Mica | A-21S | 10% | 0 | 7.36 | 20.5 | 41.9 | 0.63 |
| Example 14 | 0.75 | 82% | Polyether phosphate | DISPARLON AQ-330 | 0.1% | Mica | A-21S | 10% | 0 | 7.48 | 21.0 | 41.7 | 0.59 |

(2/2)

| | Cellulose nanofiber | | Dispersant | | | Filler | | | Mixed suspension (after leaving to stand for 3 days) | | | | |
|---|---|---|---|---|---|---|---|---|---|---|---|---|---|
| | Amount of carboxy group mmol/g | Addition concentration | Type | Product name or name | Addition concentration | Type | Product name | Addition concentration | Dispersion stability Water separation rate % | Average particle size D10 $\mu$m | Average particle size D50 $\mu$m | Average particle size D90 $\mu$m | Uniformity of particle size distribution |
| Example 15 | 0.75 | 0.2% | Polycarboxylic acid | ARON T-50 | 0.1% | Mica | A-11 | 10% | 0 | 1.25 | 4.52 | 13.8 | 0.87 |
| Example 16 | 0.75 | 0.3% | Polycarboxylic acid | ARON T-50 | 0.1% | Mica | B-82 | 10% | 0 | 31.8 | 145 | 389 | 0.76 |
| Comparative Example 1 | 0.75 | 0.2% | - | - | - | Kaolin | BARRISURF HX | 1% | 94 | 2.84 | 7.02 | 23.8 | 4.26 |
| Comparative Example 2 | 0.75 | 0.1% | - | - | - | Calcium carbonate | Cal-lite KT | 10% | 32 | 13.5 | 39.1 | 96.5 | 0.67 |
| Comparative Example 3 | 0.75 | 0.2% | - | - | - | Mica | A-21S | 10% | 20 | 9.54 | 24.0 | 51.7 | 2.48 |

| | Cellulose nanofiber | | Dispersant | | | Filler | | | Mixed suspension (after leaving to stand for 3 days) | | | | |
|---|---|---|---|---|---|---|---|---|---|---|---|---|---|
| | Amount of carboxy group mmol/g | Addition concentration | Type | Product name or name | Addition concentration | Type | Product name | Addition concentration | Dispersion stability Water separation rate % | Average particle size D10 μm | Average particle size D50 μm | Average particle size D90 μm | Uniformity of particle size distribution |
| Comparative Example 4 | 0.75 | 0.2% | - | | - | Mica | A-11 | 10% | 1 | 1.26 | 5.04 | 31.7 | 21.15 |
| Comparative Example 5 | 0.75 | 0.3% | - | - | - | Mica | B-82 | 10% | 6 | 42.7 | 157 | 399 | 0.69 |
| Comparative Example 6 | - | - | Polycarboxylic acid | ARON T-50 | 0.1% | Kaolin | BARRISURF HX | 1% | 6 | 2.74 | 7.79 | 30.6 | 1.06 |
| Comparative Example 7 | - | - | Polycarboxylic acid Carboxymethyl cellulose | ARON T-50 FS600LC | 0.1% 0.2% | Kaolin | BARRISURF HX | 10% | 2 | 3.22 | 9.80 | 48.2 | 5.11 |
| Comparative Example 8 | - | - | Polycarboxylic acid | ARON T-50 | 0.1% | Calcium carbonate | Cal-lite KT | 10% | 6 | 2.14 | 4.60 | 12.6 | 0.93 |
| Comparative Example 9 | - | - | Polycarboxylic acid | ARON T-50 | 0.1% | Mica | A-21S | 10% | 10 | 10.2 | 23.2 | 43.9 | 0.52 |
| Comparative Example 10 | - | - | Polycarboxylic acid | ARON T-50 | 0.1% | Mica | A-11 | 10% | 4 | 0.93 | 3.68 | 10.0 | 0.82 |
| Comparative Example 11 | - | - | Polycarboxylic acid | ARON T-50 | 0.1% | Mica | B-82 | 10% | 84 | 34.1 | 153 | 390 | 0.71 |

EP 3 995 543 A1

16

As can be seen from Table 1, in the mixed suspension containing (1) the dispersant, (2) the cellulose nanofiber, and (3) the filler, the water separation rate was low, the dispersion stability of the filler was excellent, and the uniformity of particle size distribution was also excellent (Examples 1 to 16).

On the other hand, in the case of containing (2) the cellulose nanofiber and (3) the filler but not containing (1) the dispersant, the value of the water separation rate was large, and the dispersion stability of the filler was poor, and as compared with those of examples, a difference in the measurement results of the particle size was found (Comparative Examples 1 to 5). Specifically, when kaolin and mica were used as the filler, the numerical value of the uniformity of the particle size distribution was high, and the uniformity was deteriorated. In Comparative Example 5 in which the large particle size B-82 was used as mica, the value of the particle size D10 was large. When calcium carbonate was used as the filler, the particle sizes D10 and D50 were large.

Furthermore, in the case where (2) the cellulose nanofiber was not contained but (1) the dispersant and (3) the filler were contained, the value of the water separation rate was large, and the dispersion stability of the filler was poor (Comparative Examples 6 to 11).

From the above results, fine cellulose nanofiber is considered to penetrate into the filler to inhibit sedimentation of the filler. In the case of an anionically modified cellulose nanofiber, the cellulose nanofiber is considered to function not only as an effect of preventing sedimentation but also as an anionic dispersant to some extent.

However, even in the presence of the cellulose nanofibers, aggregation occurs when fillers that are likely to cause aggregation in water are used. This is because the function of the cellulose nanofibers as an anionic dispersant alone is insufficient as an effect of preventing aggregation of such fillers. The aggregated filler is considered to easily sediment, and cause water separation even in the presence of cellulose nanofibers. By using the cellulose nanofiber and the dispersant in combination, the effect of suppressing aggregation of the filler and preventing sedimentation thereof can be obtained.

**Claims**

1.  A mixed suspension comprising (1) to (3) below:

    (1) a dispersant;
    (2) a cellulose nanofiber; and
    (3) a filler.

2.  The mixed suspension according to claim 1, wherein the dispersant is an anionic polymer compound.

3.  The mixed suspension according to claim 2, wherein the anionic polymer compound is a polymer compound having a carboxy group or a polymer compound having a phosphate group.

4.  The mixed suspension according to any one of claims 1 to 3, wherein the cellulose nanofiber is an anionically modified cellulose nanofiber.

5.  The mixed suspension according to claim 4, wherein the anionically modified cellulose nanofiber is an oxidized cellulose nanofiber.

6.  The mixed suspension according to claim 5, wherein the oxidized cellulose nanofiber has an amount of the carboxy group of 0.4 to 1.0 mmol/g.

7.  The mixed suspension according to any one of claims 1 to 6, wherein an amount of the cellulose nanofiber to be added is an amount such that a concentration is 0.1 mass% or more.

8.  The mixed suspension according to any one of claims 1 to 7, wherein a water separation rate after leaving to stand for 72 hours is less than 1%.

## INTERNATIONAL SEARCH REPORT

| | International application No. |
|---|---|
| | PCT/JP2020/023667 |

**A. CLASSIFICATION OF SUBJECT MATTER**
C08L 101/06(2006.01)i; B82Y 30/00(2011.01)i; C08B 15/04(2006.01)i; C08L 1/02(2006.01)i; C08L 101/02(2006.01)i
FI: C08L101/06 ZNM; C08B15/04; B82Y30/00; C08L101/02; C08L1/02
According to International Patent Classification (IPC) or to both national classification and IPC

**B. FIELDS SEARCHED**

Minimum documentation searched (classification system followed by classification symbols)
C08L101/06; B82Y30/00; C08B15/04; C08L1/02; C08L101/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISRTY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2016/043146 A1 (NAGOYA UNIVERSITY) 24.03.2016 (2016-03-24) claims, paragraphs [0025], [0027], examples | 1-3, 7<br>4-6, 8 |
| A | JP 2018-70835 A (GOO CHEMICAL CO., LTD.) 10.05.2018 (2018-05-10) | 1-8 |
| A | JP 2017-128664 A (NIPPON PAPER INDUSTRIES CO., LTD.) 27.07.2017 (2017-07-27) | 1-8 |
| A | JP 2018-16745 A (NIPPON PAPER INDUSTRIES CO., LTD.) 01.02.2018 (2018-02-01) | 1-8 |
| A | WO 2015/107995 A1 (NIPPON PAPER INDUSTRIES CO., LTD.) 23.07.2015 (2015-07-23) | 1-8 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 August 2020 (28.08.2020) | 08 September 2020 (08.09.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

International application No.

PCT/JP2020/023667

| Patent Documents referred in the Report | Publication Date | Patent Family | Publication Date |
|---|---|---|---|
| WO 2016/043146 A1 | 24 Mar. 2016 | US 2016/0319176 A1 claims, paragraphs [0028], [0030], examples | |
| JP 2018-70835 A | 10 May 2018 | (Family: none) | |
| JP 2017-128664 A | 27 Jul. 2017 | WO 2017/126566 A1 | |
| JP 2018-16745 A | 01 Feb. 2018 | (Family: none) | |
| WO 2015/107995 A1 | 23 Jul. 2015 | US 2016/0333116 A1 EP 3095815 A1 CN 105916929 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008001728 A